(19) Europäisches Patentamt
European Patent Office
Office européen des brevets

(11) Veröffentlichungsnummer: **0 225 452**
**B1**

(12) # EUROPÄISCHE PATENTSCHRIFT

(45) Veröffentlichungstag der Patentschrift: **03.01.90**

(51) Int. Cl.⁴: **C08F 210/02**, C08F 4/64

(21) Anmeldenummer: **86114298.2**

(22) Anmeldetag: **16.10.86**

(54) **Verfahren zum Herstellen von Copolymerisaten des Ethylens mittels eines Ziegler-Katalysatorsystems.**

(30) Priorität: **30.10.85 DE 3538576**

(43) Veröffentlichungstag der Anmeldung: **16.06.87 Patentblatt 87/25**

(45) Bekanntmachung des Hinweises auf die Patenterteilung: **03.01.90 Patentblatt 90/1**

(84) Benannte Vertragsstaaten: **BE DE FR GB IT**

(56) Entgegenhaltungen:
**DE-A- 2 721 094**
**GB-A- 2 068 007**

(73) Patentinhaber: **BASF Aktiengesellschaft, Carl-Bosch-Strasse 38, D-6700 Ludwigshafen(DE)**

(72) Erfinder: **Vogt, Heinz, Dr., Pranckhstrasse 30, D-6700 Ludwigshafen(DE)**

EP 0 225 452 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die vorliegende Erfindung liegt im Rahmen eines Verfahrens zum Herstellen von Copolymerisaten des Ethylens mit untergeordneten Mengen an $C_3$- bis $C_8$-, insbesondere $C_4$- bis $C_6$-α-Monoolefinen durch Polymerisation des bzw. der Monomeren bei Temperaturen von 30 bis 200, insbesondere 50 bis 100°C, und Drücken von 1 bis 200, insbesondere 5 bis 60 bar, mittels eines Ziegler-Katalysatorsystems aus

(1) einer Titan enthaltenden Katalysatorkomponente und
(2) einer Aluminium enthaltenden Katalysatorkomponente der Formel
$AlR_3$,
worin steht
R für einen $C_1$- bis $C_{12}$-Kohlenwasserstoffrest, vorzugsweise eine $C_1$- bis $C_{12}$- und insbesondere eine $C_2$- bis $C_8$-Alkylgruppe,

mit den Maßgaben, daß (i) das Atomverhältnis Titan aus der Katalysatorkomponente (1) : Aluminium aus der Katalysatorkomponente (2) im Bereich von 1:5 bis 1:700, insbesondere 1:10 bis 1:500, liegt und (ii) als Titan enthaltende Katalysatorkomponente (1) eingesetzt wird das festphasige Produkt (VI), das erhalten worden ist, indem man

(1.1) zunächst
(1.1.1) einen feinteiligen, porösen, anorganisch-oxidischen Stoff (I), der einen Teilchendurchmesser von 1 bis 1.000, insbesondere 10 bis 400μm, ein Porenvolumen von 0,3 bis 3, insbesondere 1 bis 2,5 $cm^3/g$ sowie eine Oberfläche von 100 bis 1.000, insbesondere 200 bis 400 $m^2/g$ besitzt und die Formel $SiO_2.aAl_2O_3$ - worin a steht für eine Zahl im Bereich von 0 bis 2, insbesondere 0 bis 0,5 - hat, und
(1.1.2) eine Lösung (II), wie sie sich ergibt beim Zusammenbringen von
(IIa) 100 Gew.-Teilen eines Alkohols der Formel
$R^1 - OH$,
worin steht
$R^1$ für einen gesättigten $C_1$- bis $C_8$-Kohlenwasserstoffrest, vorzugsweise einen gesättigten $C_1$- bis $C_6$-Kohlenwasserstoffrest, und insbesondere eine $C_1$- bis $C_4$-Alkylgruppe,
(IIb) 0,01 bis 6, insbesondere 0,04 bis 3,5 Gew.-Teilen (gerechnet als Titan) eines Titantrichlorids der Formel $TiCl_3.nAlCl_3$ - worin n steht für eine Zahl im Bereich von 0 bis 0,5, vorzugsweise 0,2 bis 0,4, und insbesondere 0,31 bis 0,35 -, sowie
(IIc) 0,01 bis 4, insbesondere 0,04 bis 2,5 Gew.-Teilen (gerechnet als Magnesium) Magnesiumchlorid ($MgCl_2$),
miteinander in Berührung bringt unter Bildung einer Dispersion (III), mit der Maßgabe, daß das Gewichtsverhältnis anorganisch-oxidischer Stoff (I) : Titan in dem Titantrichlorid (IIb) im Bereich von 1:0,01 bis 1:0,2 und das Gewichtsverhältnis anorganisch-oxidischer Stoff (I) : Magnesium in dem Magnesiumchlorid (IIc) im Bereich von 1:0,01 bis 1:0,25 liegt, die Dispersion (III) bei einer Temperatur, die unterhalb von 200, insbesondere unterhalb von 160°C, und oberhalb des Schmelzpunktes des verwendeten Alkohols (IIa) liegt, bis zur trockenen Konsistenz - Bildung eines festphasigen Zwischenproduktes (IV) - eindampft und
(1.2) dann
(1.2.1) das aus Stufe (1.1) erhaltene festphasige Zwischenprodukt (IV) und
(1.2.2) eine in einem inerten Kohlenwasserstoff gelöste Aluminiumkomponente (V), die neben Aluminium auch einen $C_1$- bis $C_{12}$-Kohlenwasserstoffrest, vorzugsweise eine $C_1$- bis $C_{12}$-, und insbesondere eine $C_1$- bis $C_8$-Alkylgruppe enthält,
miteinander in Berührung bringt unter Bildung einer Dispersion, wobei das dabei als Dispergiertes resultierende festphasige Produkt (VI) die Titan enthaltende Katalysatorkomponente (1) ist.

Polymerisationsverfahren dieser Art sind bekannt, wobei im gegebenen Zusammenhang als repräsentativ das in der GB-PS 1 601 418 beschriebene gelten kann.
Die genannte Verfahrensart hat - ebenso wie in Parallele zu setzende andere Verfahrensarten - zum Kernstück eine in besonderer Weise ausgestaltete Titan enthaltende Katalysatorkomponente (1).
Die besonderen Ausgestaltungen dieser Katalysatorkomponente (1) werden bekanntlich vorgenommen, um bestimmte Ziele zu erreichen, wie die folgenden:

(a) Katalysatorsysteme, die eine erhöhte Ausbeute an Polymerisat zu liefern vermögen, nämlich Katalysatorsysteme mit einer erhöhten Produktivität, d.h. Systeme, bei denen die Menge an gebildetem Polymerisat pro Gewichtseinheit Übergangsmetall der Katalysatorkomponente (1) erhöht ist.
(b) Katalysatorsysteme, durch die weniger bzw. kein Halogen in das Polymerisat eingebracht wird; - was zu erreichen ist, indem
($b_1$) die Ausbeute gemäß (a) gesteigert wird und/oder
($b_2$) Katalysatorkomponenten (1) eingesetzt werden, die kein Halogen enthalten.

(c) Katalysatorsysteme, die bei der Copolymerisation von Ethylen mit höheren$\alpha$-Monoolefinen zu Copolymerisaten mit deutlich abgesenkten Polymerdichten führen.

(d) Katalysatorsysteme, die es ermöglichen, bei der Polymerisation unter Einwirkung eines Molekulargewichtsreglers, wie insbesondere Wasserstoff, mit relativ geringen Mengen an Regler auszukommen; - was z.B. für die Thermodynamik der Verfahrensführung von Bedeutung sein kann.

(e) Katalysatorsysteme, die einfach und sicher herzustellen und gut handzuhaben sind; - z.B. solche, die sich in (inerten) Kohlenwasserstoff-Hilfsmedien zubereiten lassen.

(f) Katalysatorsysteme, die zu Polymerisaten, insbesondere Copolymerisaten von Ethylen mit höheren $\alpha$-Monoolefinen, führen, die geringe in n-Heptan lösliche Anteile aufweisen; - wodurch z.B. die Klebneigung von Folien aus diesen Polymerisaten zurückgedrängt werden kann.

(g) Katalysatorsysteme, die vergleichsweise geringe Mengen an Aluminium enthaltender Komponente (2) benötigen; - wodurch sich z.B. Ablagerungen und Korrosionsschäden an Reaktorteilen vermindern lassen.

(h) Katalysatorsysteme, durch welche die morphologischen Eigenschaften der Polymerisate in bestimmter Weise beeinflußt werden, etwa im Sinne einer einheitlichen Korngröße und/oder einer Verminderung des Feinstkornanteils und/oder eines hohen Schüttgewichtes; - was für die technische Beherrschung der Polymerisationssysteme, die Aufbereitung der Polymerisate und/oder die Verarbeitbarkeit der Polymerisate von Bedeutung sein kann.

(i) Katalysatorsysteme, die bei der Copolymerisation von Ethylen mit höheren $\alpha$-Monoolefinen es vermögen, die letzteren in besonders hohen relativen Quantitäten in das Copolymerisat einzubauen; - was z.B. für die technische Beherrschung des Polymerisationsverfahrens, insbesondere beim Herstellen von Copolymerisaten mit Dichten (nach DIN 53 479) von $\leq$ 0,930 g/cm$^3$, und/oder bei der Copolymerisation unter Verwendung von geradkettigen $C_4$-, $C_6$- bzw. $C_8$-$\alpha$-Monoolefinen als Comonomere von Wichtigkeit sein kann.

Nach den bisherigen Erfahrungen gibt es unter den mannigfachen Zielen etliche Ziele, die man durch besondere Ausgestaltung des Katalysatorsystems nur dann erreichen kann, wenn man andere Ziele zurücksetzt.

Unter diesen Gegebenheiten ist man im allgemeinen bestrebt, solche Ausgestaltungen zu finden, mit denen man nicht nur die gesteckten Ziele erreicht, sondern auch andere erwünschte Ziele möglichst wenig zurücksetzen muß.

In diesem Rahmen lag auch die Aufgabenstellung, die zur vorliegenden Erfindung geführt hat: Eine neue Art Titan enthaltende Katalysatorkomponente (1) aufzuzeigen, mit der man gegenüber bekannten Titan enthaltenden Katalysatorkomponenten (1) - unter vergleichbarer Zielsetzung - bessere Ergebnisse erreichen kann, insbesondere was das vorgenannte Ziel (i) betrifft, das möglichst gut erreicht werden soll, bei zugleich gutem Erreichen auch der Ziele (a), (f) und (h).

Es wurde gefunden, daß die gestellte Aufgabe gelöst werden kann, wenn man bei dem eingangs definierten Polymerisationsverfahren ein Ziegler-Katalysatorsystem einsetzt, dessen Titan enthaltende Katalysatorkomponente (1) eine solche ist, bei deren Herstellung man in Stufe (1.2) eine Aluminiumkomponente (V) eingesetzt hat, die besteht aus (1.2.2.1) einer bestimmten Komplexverbindung aus einem spezifischen Silan und einer spezifischen organischen Aluminiumverbindung sowie (1.2.2.2) - gegebenenfalls - zusätzlich weiterer spezifischer organischer Aluminiumverbindung als solcher.

Gegenstand der vorliegenden Erfindung ist dementsprechend ein Verfahren zum Herstellen von Copolymerisaten des Ethylens mit untergeordneten Mengen an $C_3$- bis $C_8$-, insbesondere $C_4$- bis $C_6$- -Monoolefinen durch Polymerisation des bzw. der Monomeren bei Temperaturen von 30 bis 200, insbesondere 50 bis 100°C, und Drücken von 1 bis 200, insbesondere 5 bis 60 bar, mittels eines Ziegler-Katalysatorsystems aus

(1) einer Titan enthaltenden Katalysatorkomponente und

(2) einer Aluminium enthaltenden Katalysatorkomponente der Formel

$AlR_3$,

worin steht

R für einen $C_1$- bis $C_{12}$-Kohlenwasserstoffrest, vorzugsweise eine $C_1$- bis $C_{12}$- und insbesondere eine $C_2$- bis $C_8$-Alkylgruppe,

mit den Maßgaben, daß (i) das Atomverhältnis Titan aus der Katalysatorkomponente (1) : Aluminium aus der Katalysatorkomponente (2) im Bereich von 1:5 bis 1:700, insbesondere 1:10 bis 1:500, liegt und (ii) als Titan enthaltende Katalysatorkomponente (1) eingesetzt wird das festphasige Produkt (VI), das erhalten worden ist, indem man

(1.1) zunächst

(1.1.1) einen feinteiligen, porösen, anorganisch-oxidischen Stoff (I), der einen Teilchendurchmesser von 1 bis 1.000, insbesondere 10 bis 400µm, ein Porenvolumen von 0,3 bis 3, insbesondere 1 bis 2,5 cm$^3$/g sowie eine Oberfläche von 100 bis 1.000, insbesondere 200 bis 400 m$^2$/g besitzt und die Formel $SiO_2 . aAl_2O_3$ - worin a steht für eine Zahl im Bereich von 0 bis 2, insbesondere 0 bis 0,5 - hat, und

(1.1.2) eine Lösung (II), wie sie sich ergibt beim Zusammenbringen von
(IIa) 100 Gew.-Teilen eines Alkohols der Formel
$R^1$ - OH,
worin steht
$R^1$ für einen gesättigten $C_1$- bis $C_8$-Kohlenwasserstoffrest, vorzugsweise einen gesättigten $C_1$- bis $C_6$-Kohlenwasserstoffrest, und insbesondere eine $C_1$- bis $C_4$-Alkylgruppe,
(IIb) 0,01 bis 6, insbesondere 0,04 bis 3,5 Gew.-Teilen (gerechnet als Titan) eines Titantrichlorids der Formel $TiCl_3.nAlCl_3$ - worin n steht für eine Zahl im Bereich von 0 bis 0,5, vorzugsweise 0,2 bis 0,4, und insbesondere 0,31 bis 0,35 -, sowie
(IIc) 0,01 bis 4, insbesondere 0,04 bis 2,5 Gew.-Teilen (gerechnet als Magnesium) Magnesiumchlorid ($MgCl_2$),
miteinander in Berührung bringt unter Bildung einer Dispersion (III), mit der Maßgabe, daß das Gewichtsverhältnis anorganisch-oxidischer Stoff (I) : Titan in dem Titantrichlorid (IIb) im Bereich von 1:0,01 bis 1:0,2 und das Gewichtsverhältnis anorganisch-oxidischer Stoff (I) : Magnesium in dem Magnesiumchlorid (IIc) im Bereich von 1:0,01 bis 1:0,25 liegt, die Dispersion (III) bei einer Temperatur, die unterhalb von 200, insbesondere unterhalb von 160°C, und oberhalb des Schmelzpunktes des verwendeten Alkohols (IIa) liegt, bis zur trockenen Konsistenz - Bildung eines festphasigen Zwischenproduktes (IV) - eindampft und
(1.2) dann
(1.2.1) das aus Stufe (1.1) erhaltene festphasige Zwischenprodukt (IV) und
(1.2.2) eine in einem inerten Kohlenwasserstoff gelöste Aluminiumkomponente (V), die neben Aluminium auch einen $C_1$- bis $C_{12}$-Kohlenwasserstoffrest, vorzugsweise eine $C_1$- bis $C_{12}$-, und insbesondere eine $C_1$- bis $C_8$-Alkylgruppe enthält,
miteinander in Berührung bringt unter Bildung einer Dispersion, wobei das dabei als Dispergiertes resultierende festphasige Produkt (VI) die Titan enthaltende Katalysatorkomponente (1) ist.

Das erfindungsgemäße Verfahren ist dadurch gekennzeichnet, daß als Titan enthaltende Katalysatorkomponente (1) eingesetzt wird das festphasige Produkt (VI), das aus Stufe (1.2) erhalten worden ist, indem man dort als Aluminiumkomponente (V) eingesetzt hat eine solche, die besteht

(1.2.2.1) zu 25 bis 100, vorzugsweise 35 bis 100, und insbesondere 50 bis 100 Mol.% aus einer in dem inerten Kohlenwasserstoff löslichen Komplexverbindung der Summenformel

$$(R^2_3Si)_mOR^3_{2-m} \cdot R^4\text{-}\underset{\displaystyle R^6}{\text{Al}}\text{-}R^5$$

oder

$$(R^2_3Si)_nNR^3_{3-n} \cdot R^4\text{-}\underset{\displaystyle R^6}{\text{Al}}\text{-}R^5$$

worin stehen:
m für die Zahl 1 oder 2, vorzugsweise die Zahl 1,
n für die Zahl 1, 2 oder 3, vorzugsweise die Zahlen 1 oder 2,
$R^2$ sowie
$R^3$ sowie
$R^4$ sowie
$R^5$ für einen $C_1$- bis $C_{12}$-Kohlenwasserstoffrest, vorzugsweise eine $C_1$- bis $C_{12}$-, und insbesondere eine $C_1$- bis $C_8$-Alkylgruppe und
$R^6$ für einen $C_1$- bis $C_{12}$-Kohlenwasserstoffrest oder Chlor, vorzugsweise eine $C_1$- bis $C_{12}$-Alkylgruppe oder Chlor, und insbesondere eine $C_1$- bis $C_8$-Alkylgruppe oder Chlor,
sowie
(1.2.2.2) zu 0 bis 75, vorzugsweise 0 bis 65, und insbesondere 0 bis 50 Mol.% aus einer in dem inerten Kohlenwasserstoff löslichen Aluminiumverbindung der Formel

$$R^4\text{-}\underset{\displaystyle R^6}{\text{Al}}\text{-}R^5$$

worin stehen:
$R^4$ sowie
$R^5$ für einen $C_1$- bis $C_{12}$-Kohlenwasserstoffrest, vorzugsweise eine $C_1$- bis $C_{12}$-, und insbesondere

eine $C_1$- bis $C_8$-Alkylgruppe und
$R^6$ für einen $C_1$- bis $C_{12}$-Kohlenwasserstoffrest oder Chlor, vorzugsweise eine $C_1$- bis $C_{12}$-Alkylgruppe oder Chlor, und insbesondere eine $C_1$- bis $C_8$-Alkylgruppe oder Chlor,

mit den Maßgaben, daß (i) die Summe der Mol.% unter (1.2.2.1) und (1.2.2.2) 100 beträgt und (ii) das Atomverhältnis Titan in dem festphasigen Zwischenprodukt (IV) zu Aluminium in der Aluminiumkomponente (V) im Bereich von 1:1 bis 1:30, insbesondere 1:2 bis 1:20, liegt.

Beim Einsatz der erfindungsgemäß erhaltenen Titan enthaltenden Katalysatorkomponente (1) kann das Polymerisationsverfahren als solches in praktisch allen einschlägig üblichen technologischen Ausgestaltungen durchgeführt werden, etwa als diskontinuierliches, taktweises oder kontinuierliches Verfahren, sei es z.B. als Suspensions-Polymerisationsverfahren oder Trockenphasen-Polymerisationsverfahren im gerührten oder gewirbelten Bett. Die erwähnten technologischen Ausgestaltungen - mit anderen Worten: die technologischen Varianten der Polymerisation von Olefinen nach Ziegler - sind aus der Literatur und Praxis wohlbekannt, so daß sich nähere Ausführungen zu ihnen erübrigen. Zu bemerken ist allenfalls noch, daß die neue Titan enthaltende Katalysatorkomponente (1) - wie entsprechende bekannte Katalysatorkomponenten - z.B. außerhalb oder innerhalb des Polymerisationsgefäßes mit der Katalysatorkomponente (2) zusammengebracht werden kann; im letztgenannten Fall etwa durch räumlich getrennten Eintrag der Komponenten, die im übrigen in Form einer Suspension (Katalysatorkomponente (1)) bzw. Lösung (Katalysatorkomponente (2)) gehandhabt werden können.

Zu der neuen Titan enthaltenden Katalysatorkomponente (1) selbst ist das Folgende zu sagen:
Ihre Herstellung erfolgt in zwei Stufen, die oben sowie nachstehend mit (1.1) und (1.2) bezeichnet sind.

In Stufe (1.1) bringt man einen feinteiligen anorganisch-oxidischen Stoff (I) der oben definierten Art und eine bestimmte, oben definierte Lösung (II) miteinander in Berührung, wobei sich eine Dispersion (III) bildet, die bis zur trockenen Konsistenz - Bildung eines festphasigen Zwischenprodukts (IV) - eingedampft wird. In Stufe (1.2) wird letzteres mit einer Lösung einer bestimmten, oben definierten - und für die vorliegende Erfindung kennzeichnenden - Aluminiumkomponente (V) in Berührung gebracht unter neuerlicher Bildung einer Dispersion; wobei das dabei als Dispergiertes resultierende festphasige Produkt (VI) die neue Katalysatorkomponente (1) ist.

Im einzelnen kann man dabei wie folgt verfahren:

Stufe (1.1)

Der anorganisch-oxidische Stoff (I) wird als Substanz oder in einem Alkohol dispergiert (zweckmäßigerweise einem Alkohol wie er unter (IIa) definiert ist und mit einem Feststoffgehalt der Dispersion von nicht weniger als 5 Gew.%) mit der Lösung (II) vereinigt. Es ist günstig, nach der Vereinigung das Ganze während einer Zeitspanne von 5 bis 120, insbesondere 20 bis 90 Minuten auf einer Temperatur von 10 bis 160, insbesondere 20 bis 120°C zu halten und erst danach die gebildete Dispersion (III) einzudampfen.

Das Herstellen der Lösung (II) selbst kann so erfolgen, wie man üblicherweise Lösungen herstellt und ist insoweit nicht mit Besonderheiten verbunden. Als arbeitstechnisch zweckmäßig hat sich erwiesen, die Lösung (II) herzustellen durch Vereinigung einer Lösung aus dem Alkohol (IIa) und dem Titantrihalogenid (IIb) mit einer Lösung aus dem Alkohol (IIa) und dem Magnesiumchlorid (IIc).

Als abschließende Maßnahme bei Stufe (1.1) wird die Dispersion (III) bis zur trockenen Konsistenz eingedampft, wobei das festphasige Zwischenprodukt (IV) erhalten wird. Hierbei kann man - unter Einhaltung der oben gegebenen Temperaturbedingungen - so verfahren, wie man üblicherweise Dispersionen schonend eindampft. Dies bedeutet, daß es im allgemeinen zweckmäßig ist, das Eindampfen unter mehr oder minder stark erniedrigtem Druck vorzunehmen. Als Faustregel gilt, daß man das Paar Temperatur/Druck so wählen sollte, daß der Eindampfvorgang nach etwa 1 bis 10 Stunden beendet ist. Zweckmäßig ist es auch, das Eindampfen unter steter Wahrung der Homogenität des behandelten Gutes vorzunehmen; - wofür sich z.B. Rotationsverdampfer bewährt haben. Eine verbleibende Restmenge an Alkohol, etwa eine durch Komplexbildung gebundene Menge, ist für das festphasige Zwischenprodukt (IV) im allgemeinen ohne Schaden.

Stufe (1.2)

Man bereitet zunächst in getrennten Ansätzen eine 1- bis 20-, vorzugsweise etwa 10 gew.%ige Suspension des festphasigen Zwischenprodukts (IV) sowie eine 5- bis 80-, vorzugsweise etwa 10 gew.%ige Lösung der Aluminiumkomponente (V), wobei als Suspensions- bzw. Lösungsmittel inerte Kohlenwasserstoffe, vor allem relativ leichtsiedende Alkan-Kohlenwasserstoffe, wie Hexane, Heptane oder Benzine, verwendet werden. Danach vereinigt man die Suspension und die Lösung in solchen Mengenverhältnissen, daß das gewünschte Gewichtsverhältnis erreicht wird. Zur Vereinigung wird man im allgemeinen die Lösung in die Suspension unter Rühren einbringen, denn diese Verfahrensweise ist praktischer als die - ebenfalls mögliche - umgekehrte. Bei - zweckmäßigerweise nicht zu übersteigenden - Arbeitstemperaturen von 15 bis 60, insbesondere 25 bis 40°C, ist innerhalb einer Zeitspanne von 60 bis 300, insbesondere 90 bis 180 Minuten, die Bildung des - als Dispergiertes vorliegenden - festphasigen Produktes (VI) erfolgt. Dieses kann unmittelbar in Form der erhaltenen Dispersion - zweckmäßigerweise nach einer Wäsche durch Digerieren - als Titan enthaltende Katalysatorkomponente (1) verwendet werden. Im allgemeinen günstiger ist es aber, das festphasige Produkt (VI) zu isolieren und dann erst als Katalysatorkomponente (1) einzusetzen; - wobei sich zum Isolieren z.B. der folgende Weg anbietet: Man trennt das Produkt (VI) von der flüssigen Phase mittels Filtration und wäscht es mit reiner Flüssigkeit (etwa der Art, die man auch als Suspensions- bzw. Lösungsmittel verwendet hatte), worauf man es trocknet, etwa im Vakuum.

Sofern die in Stufe (1.2) einzusetzende Aluminiumkomponente (V) nicht nur aus (1.2.2.1) der oben definierten löslichen Komplexverbindung

$$(R^2_3Si)_mOR^3_{2-m} \cdot R^4\text{-}\underset{\displaystyle R^6}{\underset{|}{Al}}\text{-}R^5$$

oder

$$(R^2_3Si)_nNR^3_{3-n} \cdot R^4\text{-}\underset{\displaystyle R^6}{\underset{|}{Al}}\text{-}R^5$$

sondern auch zusätzlich (1.2.2.2) der oben definierten löslichen Aluminiumverbindung

$$R^4\text{-}\underset{\displaystyle R^6}{\underset{|}{Al}}\text{-}R^5$$

als solcher besteht, kann man das aus Stufe (1.1) erhaltene Zwischenprodukt (IV) mit einer gemeinsamen Lösung der Komplex- sowie der Aluminiumverbindung behandeln oder - was im allgemeinen vorteilhafter ist - nacheinander zunächst mit einer Lösung der Komplexverbindung und dann mit einer Lösung der Aluminiumverbindung.

Die neuen Titan enthaltenden Katalysatorkomponenten (1), d.h. die festphasigen Produkte (VI), lassen sich im Rahmen des eingangs dargelegten Polymerisationsverfahrens zum Herstellen der dort genannten Polymerisate so einsetzen, wie man üblicherweise die Titan enthaltenden Verbindungen bei der Polymerisation von Olefinen nach Ziegler einsetzt. Insoweit sind also keine Besonderheiten gegeben, und es kann auf die aus Literatur und Praxis wohlbekannten Einsatzweisen verwiesen werden. - Es ist lediglich noch zu sagen, daß die neuen Katalysatorkomponenten (1) sich zum Herstellen von Copolymerisaten des Ethylens eignen und daß als Copolymerisationspartner neben Propen und Octen-1 vor allem Buten-1, 4-Methylpenten-1 und Hexen-1 in Betracht kommen. Die Regelung der Molekulargewichte der Polymerisate kann in einschlägig üblicher Weise erfolgen, insbesondere mittels Wasserstoff als Regulans.

Was die stoffliche Seite der neuen Titan enthaltenden Katalysatorkomponenten (1) betrifft, ist im einzelnen noch das Folgende zu sagen:

Der in Stufe (1.1) einzusetzende anorganisch-oxidische Stoff (I) wird im allgemeinen ein Alumosilikat oder - insbesondere - ein Siliciumdioxid sein; wichtig ist, daß der Stoff die geforderten Eigenschaften besitzt und möglichst trocken ist. Besonders gut geeignete anorganisch-oxidische Stoffe sind solche, die gemäß der ersten Stufe (1) des in der GB-PS 1 550 951 beschriebenen Verfahrens erhalten werden, insbesondere dann, wenn dabei von Hydrogelen ausgegangen wird, die nach dem in der GB-PS 1 368 711 beschriebenen Verfahren erhalten werden.

Die einzusetzenden Alkohole (IIa) können z.B. sein: Methanol, Ethanol, Isopropanol, n-Propanol, eines der drei isomeren Butanole oder ein Hexanol, wie n-Hexanol. Die Alkohole (IIa) können eingesetzt werden in Form von Einzelindividuen sowie Gemischen aus zwei oder mehr Einzelindividuen.

Das einzusetzende Titantrichlorid (IIb) kann ein bei Ziegler-Katalysatorsystemen übliches sein, z.B. ein bei der Reduktion von Titantetrachlorid mittels Wasserstoff, Aluminium oder aluminiumorganischen Verbindungen erhaltenes Reaktionsprodukt. Als besonders gut geeignet haben sich erwiesen Trichloride der Formel $TiCl_3$, wie sie bei der Reduktion von Titantetrachlorid mittels Wasserstoff anfallen sowie Trichloride der Formel $TiCl_3 \cdot AlCl_3$, wie sie bei der Reduktion von Titantetrachlorid mittels metallischem Aluminium anfallen. Die Titantrichloride können eingesetzt werden in Form von Einzelindividuen sowie Gemischen aus zwei oder mehr Einzelindividuen.

Die ebenfalls in Stufe (1.1) einzusetzende Magnesiumverbindung (IIc) ist Magnesiumchlorid ($MgCl_2$).

Die in Stufe (1.2) einzusetzende Aluminiumkomponente (V) besteht erfindungsgemäß

(1.2.2.1) zu 25 bis 100, vorzugsweise 35 bis 100, und insbesondere 50 bis 100 Mol.% aus einer in dem inerten Kohlenwasserstoff löslichen Komplexverbindung der Summenformel

$$(R^2_3Si)_mOR^3_{2-m} \cdot R^4-\underset{\displaystyle R^6}{\underset{|}{Al}}-R^5$$

oder

$$(R^2_3Si)_nNR^3_{3-n} \cdot R^4-\underset{\displaystyle R^6}{\underset{|}{Al}}-R^5$$

worin stehen:
m für die Zahl 1 oder 2, vorzugsweise die Zahl 1,
n für die Zahl 1, 2 oder 3, vorzugsweise die Zahlen 1 oder 2,
$R^2$ sowie
$R^3$ sowie
$R^4$ sowie
$R^5$ für einen $C_1$- bis $C_{12}$-Kohlenwasserstoffrest, vorzugsweise eine $C_1$- bis $C_{12}$-, und insbesondere eine $C_1$- bis $C_8$-Alkylgruppe und
$R^6$ für einen $C_1$- bis $C_{12}$-Kohlenwasserstoffrest oder Chlor, vorzugsweise eine $C_1$- bis $C_{12}$-Alkylgruppe oder Chlor, und insbesondere eine $C_1$- bis $C_8$-Alkylgruppe oder Chlor,
sowie

(1.2.2.2) zu O bis 75, vorzugsweise O bis 65, und insbesondere O bis 5O Mol.% aus einer in dem inerten Kohlenwasserstoff löslichen Aluminiumverbindung der Formel

$$R^4-\underset{\displaystyle R^6}{\underset{|}{Al}}-R^5$$

worin stehen:
$R^4$ sowie
$R^5$ für einen $C_1$- bis $C_{12}$-Kohlenwasserstoffrest, vorzugsweise eine $C_1$- bis $C_{12}$-, und insbesondere eine $C_1$- bis $C_8$-Alkylgruppe und
$R^6$ für einen $C_1$- bis $C_{12}$-Kohlenwasserstoffrest oder Chlor, vorzugsweise eine $C_1$- bis $C_{12}$-Alkylgruppe oder Chlor, und insbesondere eine $C_1$- bis $C_8$-Alkylgruppe oder Chlor,

mit der Maßgabe, daß die Summe der Mol.% unter (1.2.2.1) und (1.2.2.2) 1OO beträgt.

Bei den Komplexverbindungen eignen sich - jeweils unter Wahrung der oben unter (1.2.2.1) gegebenen Rangfolge - z.B. die folgenden Aufbaupartner:

(i) Seitens der Silane, Trimethylmethoxysilan, Triethylmethoxysilan, Trimethylethoxysiln, Triethylethoxysilan, Trimethylpropoxysilan, Trimethylphenoxysilan, Hexamethyldisiloxan, Hexaethyldisiloxan, N-Trimethylsilyldimethylamin, N,N-Bis(Trimethylsilyl)methylamin, N,N-Trimethylsilyldiethylamin sowie N,N-Bis(Triemthylsilyl)ethylamin.
Die Silane können vorliegen in Form von Einzelindividuen sowie Gemischen aus zwei oder mehr Einzelindividuen.

(ii) Seitens des aluminiumorganischen Teils vor allem Diethylaluminiumchlorid sowie auch Triethylaluminium und Triisobutylaluminium.
Auch diese Aufbaupartner können vorliegen in Form von Einzelindividuen sowie Gemischen aus zwei oder mehr Einzelindividuen.

Die Komplexverbindungen als solche sind ihrer Art nach bekannt; eine gut geeignete Methode zu ihrer Herstellung ist z.B. gegeben durch E.B. Baker und H.H. Sisler in Am.Soc. 75, 4828 (1953).

Als Aluminium enthaltende Komponente (2) des erfindungsgemäß einzusetzenden Ziegler-Katalysatorsystems kommen die einschlägig üblichen, der oben gegebenen Formel gehorchenden in Betracht; sie sind aus Literatur und Praxis so wohlbekannt, daß auf sie nicht näher eingegangen zu werden braucht. Als herausragende Vertreter seien beispielsweise genannt Triethylaluminium, Tri-isobutylaluminium und Tri-n-butylaluminium.

Abschließend ist noch zu bemerken, daß die erfindungsgemäßen Titan enthaltenden Katalysatorkomponenten (1), d.h. die Produkte (VI) empfindlich gegen hydrolytische sowie oxidative Einflüsse sind. Insoweit sollte man beim Umgang mit diesen Substanzen also die für Ziegler-Katalysatoren einschlägig üblichen Vorsichtsmaßnahmen treffen (z.B. Feuchtigkeitsausschluß, Inertgasatmosphäre).

Beispiel 1

Herstellen der Titan enthaltenden Katalysatorkomponente (1)

(1.1) Zunächst verfährt man in einer ersten Stufe so, daß man

(1.1.1) einen feinteiligen, porösen, anorganisch-oxidischen Stoff (I), der einen Teilchendurchmesser von 100 bis 300µm, ein Porenvolumen von 1,9 $cm^3/g$ sowie eine Oberfläche von 280 $m^2/g$ besitzt und die Formel $SiO_2$ hat, und

(1.1.2) eine Lösung (II), wie sie sich ergibt beim Zusammenbringen von

(IIa) 100 Gew.-Teilen Methanol,

(IIb) 0,8 Gew.-Teilen (gerechnet als Titan) eines Titantrichlorids der Formel $TiCl_3.nAlCl_3$ - worin n steht für die Zahl 0,33 -, sowie

(IIc) 1,5 Gew.-Teilen (gerechnet als Magnesium) Magnesiumchlorid ($MgCl_2$),

unter Rühren über eine Stunde bei einer Temperatur von 40°C miteinander in Berührung bringt unter Bildung einer Dispersion (III), mit der Maßgabe, daß das Gewichtsverhältnis anorganisch-oxidischer Stoff (I) : Titan in dem Titantrichlorid (IIb) 1:0,04 und das Gewichtsverhältnis anorganisch-oxidischer Stoff (I) : Magnesium in dem Magnesiumchlorid (IIc) 1:0,075 beträgt, und die Dispersion (III) mittels eines Rotationsverdampfers, der bis zu einem Betriebsdruck von 30 Torr und einer Betriebstemperatur von 70°C gebracht wird, bis zur trockenen Konsistenz - Bildung eines festphasigen Zwischenproduktes (IV) -eindampft.

Dieses Zwischenprodukt (IV) enthält 2,1 Gew.% Titan.

(1.2) Dann verfährt man in einer zweiten Stufe so, daß man

(1.2.1) 100 Gew.-Teile des aus Stufe (1.1) erhaltenen festphasigen Zwischenprodukts (IV) und

(1.2.2) eine in 280 Gew.-Teilen n-Heptan gelöste Aluminiumkomponente (V), die besteht

(1.2.2.1) zu 50 Mol.% aus einer (in dem n-Heptan löslichen) Komplexverbindung der Summenformel

$$(R^2_3Si)_mOR^3_{2-m} \cdot \begin{array}{c} R^4-Al-R^5 \\ | \\ R^6 \end{array}$$

worin stehen:
m für die Zahl 2,
$R^2$ für eine Methylgruppe,
$R^4$ sowie
$R^5$ für eine Ethylgruppe und
$R^6$ für Chlor,
sowie

(1.2.2.2) zu 50 Mol.% aus einer (in dem n-Heptan) löslichen Aluminiumverbindung der Formel

$$\begin{array}{c} R^4-Al-R^5 \\ | \\ R^6 \end{array}$$

worin stehen:
$R^4$ sowie
$R^5$ für eine Ethylgruppe und
$R^6$ für Chlor,
unter Rühren über zwei Stunden bei einer Temperatur von 35°C -mit der Maßgabe, daß das Atomverhältnis Titan in dem festphasigen Zwischenprodukt (IV) zu Aluminium in der Aluminiumkomponente (V) 1:7 beträgt - miteinander in Berührung bringt unter Bildung einer Dispersion, wobei das dabei als Dispergiertes resultierende festphasige Produkt (VI) die Titan enthaltende Katalysatorkomponente (1) ist.

Letztere wird durch Absaugen isoliert, mehrmals mit n-Heptan gewaschen und getrocknet; sie enthält 1,2 Gew.% Titan.

Polymerisation mittels der vorstehend beschriebenen Katalysatorkomponente (1)

Ein 1 l Autoklav wird mit 250 ml Isobutan, 150 ml Buten, 25 mg der Katalysatorkomponente (1) sowie 70 mg Triethylaluminium als Katalysatorkomponente (2) beschickt (entsprechend einem Atomverhältnis Titan aus der Katalysatorkomponente (1) : Aluminium aus der Katalysatorkomponente (2) von 1:100). Sodann wird unter Rühren und bei den - jeweils durch Regelung konstant gehaltenen - Parametern: Ethylenpartialdruck 15 bar, Wasserstoffpartialdruck 2,5 bar, Temperatur 75°C, über eine Zeitspanne von 1,5 Stunden polymerisiert; danach wird die Polymerisation durch Entspannen des Autoklaven abgebrochen.

Nähere Angaben zu dem Verfahrensprodukt finden sich in der untenstehenden Tabelle.

Beispiel 2

Herstellen der Titan enthaltenden Katalysatorkomponente (1)

Es erfolgt wie in Beispiel 1, mit der einzigen Ausnahme, daß in der zweiten Stufe (1.2) unter (1.2.2.1) eingesetzt wird die gleich Molmenge einer (in dem n-Heptan löslichen) Komplexverbindung der Summenformel

$$(R^2_3Si)_nNR^3_{3-n} \cdot R^4\text{-}\underset{\displaystyle R^6}{Al}\text{-}R^5$$

worin stehen:
n für die Zahl 1,
$R^2$ sowie
$R^3$ für eine Methylgruppe,
$R^4$ sowie
$R^5$ für eine Ethylgruppe und
$R^6$ für Chlor.

Die so gewonnene Katalysatorkomponente (1) enthält 1,3 Gew.% Titan.

Polymerisation mittels der vorstehend umrissenen Katalysatorkomponente (1).

Sie erfolgt wie in Beispiel 1, mit der einzigen Ausnahme, daß als Katalysatorkomponente (1) eingesetzt wird die gleiche Menge (gerechnet als Titan) der oben umrissenen Katalysatorkomponente (1).

Nähere Angaben zu dem dabei erhaltenen Verfahrensprodukt finden sich ebenfalls in der nachstehenden Tabelle.

| Beispiel Nr. | Produktivität 1) | Schüttdichte 2) | Schmelzindex 3) | Dichte 4) | lösl. Anteile 5) |
|---|---|---|---|---|---|
| 1 | 5,810 | 0,290 | 1,4 | 0,922 | 0,9 |
| 2 | 5,180 | 0,300 | 2,0 | 0,922 | 0,7 |

1) in g Polymerisat pro g Titan enthaltender Katalysatorkomponente (1)
2) in $g/cm^3$ nach DIN 53 468
3) MFI 190/2,16 in g/10 min nach DIN 53 735
4) in $g/cm^3$ nach DIN 53 479
5) in % des Poymerisats bei 1 g Polymerisat in 5 g n-Heptan bei 20°C innerhalb von 2 Stunden

**Patentansprüche**

Verfahren zum Herstellen von Copolymerisaten des Ethylens mit untergeordneten Mengen an $C_3$- bis $C_8$- -Monoolefinen durch Polymerisation des bzw. der Monomeren bei Temperaturen von 30 bis 200°C, und Drücken von 1 bis 200 bar, mittels eines Ziegler-Katalysatorsystems aus
(1) einer Titan enthaltenden Katalysatorkomponente und
(2) einer Aluminium enthaltenden Katalysatorkomponente der Formel
$AlR_3$,
worin steht
R für einen $C_1$- bis $C_{12}$-Kohlenwasserstoffrest,
mit den Maßgaben, daß (i) das Atomverhältnis Titan aus der Katalysatorkomponente (1) : Aluminium aus der Katalysatorkomponente (2) im Bereich von 1:5 bis 1:700 liegt und (ii) als Titan enthaltende Katalysatorkomponente (1) eingesetzt wird das festphasige Produkt (VI), das erhalten worden ist, indem man
(1.1) zunächst
(1.1.1) einen feinteiligen, porösen, anorganisch-oxidischen Stoff (I), der einen Teilchendurchmesser von 1 bis 1.000µm, ein Porenvolumen von 0,3 bis 3 $cm^3/g$ sowie eine Oberfläche von 100 bis 1.000 $m^2/g$ besitzt und die Formel $SiO_2.aAl_2O_3$ - worin a steht für eine Zahl im Bereich von 0 bis 2 - hat, und
(1.1.2) eine Lösung (II), wie sie sich ergibt beim Zusammenbringen von
(IIa) 100 Gew.-Teilen eines Alkohols der Formel
$R^1OH$,
worin steht

$R^1$ für einen gesättigten $C_1$- bis $C_8$-Kohlenwasserstoffrest,

(IIb) O,O1 bis 6 Gew.-Teilen (gerechnet als Titan) eines Titantrichlorids der Formel $TiCl_3.nAlCl_3$ - worin n steht für eine Zahl im Bereich von O bis O,5 -, sowie

(IIc) O,O1 bis 4 Gew.-Teilen (gerechnet als Magnesium) Magnesiumchlorid ($MgCl_2$),

miteinander in Berührung bringt unter Bildung einer Dispersion (III), mit der Maßgabe, daß das Gewichtsverhältnis anorganisch-oxidischer Stoff (I) : Titan in dem Titantrichlorid (IIb) im Bereich von 1:O,O1 bis 1:O,2 und das Gewichtsverhältnis anorganisch-oxidischer Stoff (I) : Magnesium in dem Magnesiumchlorid (IIc) im Bereich von 1:O,O1 bis 1:O,25 liegt, die Dispersion (III) bei einer Temperatur, die unterhalb von 2OO°C, und oberhalb des Schmelzpunktes des verwendeten Alkohols (IIa) liegt, bis zur trockenen Konsistenz - Bildung eines festphasigen Zwischenproduktes (IV) - eindampft und

(1.2) dann

(1.2.1) das aus Stufe (1.1) erhaltene festphasige Zwischenprodukt (IV) und

(1.2.2) eine in einem inerten Kohlenwasserstoff gelöste Aluminiumkomponente (V), die neben Aluminium auch einen $C_1$- bis $C_{12}$-Kohlenwasserstoffrest enthält,

miteinander in Berührung bringt unter Bildung einer Dispersion, wobei das dabei als Dispergiertes resultierende festphasige Produkt (VI) die Titan enthaltende Katalysatorkomponente (1) ist,

dadurch gekennzeichnet, daß als Titan enthaltende Katalysatorkomponente (1) eingesetzt wird das festphasige Produkt (VI), das aus Stufe (1.2) erhalten worden ist, indem man dort als Aluminiumkomponente (V) eingesetzt hat eine solche, die besteht

(1.2.2.1) zu 25 bis 1OO Mol.% aus einer in dem inerten Kohlenwasserstoff löslichen Komplexverbindung der Summenformel

$$(R^2_3Si)_mOR^3_{2-m} \cdot R^4-\underset{\substack{|\\R^6}}{Al}-R^5$$

oder

$$(R^2_3Si)_nNR^3_{3-n} \cdot R^4-\underset{\substack{|\\R^6}}{Al}-R^5$$

worin stehen: m für die Zahl 1 oder 2,

n für die Zahl 1, 2 oder 3

$R^2$ sowie

$R^3$ sowie

$R^4$ sowie

$R^5$ für einen $C_1$- bis $C_{12}$-Kohlenwasserstoffrest und

$R^6$ für einen $C_1$- bis $C_{12}$-Kohlenwasserstoffrest oder Chlor

sowie

(1.2.2.2) zu O bis 75 Mol.% aus einer in dem inerten Kohlenwasserstoff löslichen Aluminiumverbindung der Formel

$$R^4-\underset{\substack{|\\R^6}}{Al}-R^5$$

worin stehen:

$R^4$ sowie

$R^5$ für einen $C_1$- bis $C_{12}$-Kohlenwasserstoffrest und

$R^6$ für einen $C_1$- bis $C_{12}$-Kohlenwasserstoffrest oder Chlor,

mit den Maßgaben, daß (i) die Summe der Mol.% unter (1.2.2.1) und (1.2.2.2) 1OO beträgt und (ii) das Atomverhältnis Titan in dem festphasigen Zwischenprodukt (IV) zu Aluminium in der Aluminiumkomponente (V) im Bereich von 1:1 bis 1:3O liegt.

## Claims

A process for preparing a copolymer of ethylene with a minor amount of a $C_3$–$C_8$-monoolefin by polymerization of the monomers at from 30 to 200°C and from 1 to 200 bar by means of a Ziegler catalyst system composed of

(1) a titanium-containing catalyst component and

(2) an aluminum-containing catalyst component of the formula

$AlR_3$,

where $R_3$ is $C_1$–$C_{12}$-hydrocarbyl,

with the proviso that (i) the atomic ratio of titanium in catalyst component (1): aluminum in catalyst component (2) is within the range from 1:5 to 1:700 and (ii) the titanium-containing catalyst component (1) used is the solid-phase product (VI) obtained by

(1.1) initially bringing into contact with each other

(1.1.1) a finely divided, porous, inorganic oxide substance (I) which has a particle diameter of from 1 to 1,000 µm, a pore volume of from 0.3 to 3 $cm^3/g$, a surface area of from 100 to 1,000 $m^2/g$ and the formula $SiO_2.aAl_2O_3$, where a is from 0 to 2, and

(1.1.2) a solution (II) as obtained on adding together

(IIa) 100 parts by weight of alcohol of the formula

$R^1-OH$,

where

$R^1$ is saturated $C_1$–$C_8$-hydrocarbyl,

(IIb) from 0.01 to 6 parts by weight (calculated at titanium) of a titanium trichloride of the formula $TiCl_3.nAlCl_3$,

where n is from 0 to 0.5, and

(IIc) from 0.01 to 4 parts by weight (calculated as magnesium) of magnesium chloride ($MgCl_2$),

to form a dispersion (III), with the proviso that the weight ratio of inorganic oxide substance (I): titanium in titanium trichloride (IIb) is within the range from 1:0.01 to 1:0.2 and the weight ratio of inorganic oxide substance (I): magnesium in magnesium chloride (IIc) is within the range from 1:0.01 to 1:0.25, evaporating the dispersion (III) at a temperature which is below 200°C and above the melting point of the alcohol (IIa) used until dry, to form a solid-phase intermediate (IV), and

(1.2) then bringing into contact with each other

(1.2.1) the solid-phase intermediate (IV) obtained from stage (1.1) and

(1.2.2) an aluminum component (V) containing $C_1$–$C_{12}$-hydrocarbyl as well as aluminum, dissolved in an inert hydrocarbon,

to form a dispersion wherein the solid-phase product (VI) resulting as the dispersed phase is titanium-containing catalyst component (1),

which comprises using as the titanium-containing catalyst component (1) the solid-phase product (VI) which has been obtained from stage (1.2) by using therein as an aluminum component (V) an aluminum component consisting

(1.2.2.1) to an extent of from 25 to 100 mol % of a complex which is soluble in the inert hydrocarbon and has the empirical formula

$$(R^2_3Si)_mOR^3_{2-m} \cdot R^4\text{-}\underset{\substack{| \\ R^6}}{Al}\text{-}R^5$$

or

$$(R^2_3Si)_nNR^3_{3-n} \cdot R^4\text{-}\underset{\substack{| \\ R^6}}{Al}\text{-}R^5$$

where

m is 1 or 2,

n is 1, 2 or 3

$R^2$ and $R^3$ and $R^4$ and $R^5$ are each $C_1$–$C_{12}$-hydrocarbyl and

$R^6$ is $C_1$–$C_{12}$-hydrocarbyl or chlorine and

(1.2.2.2) to an extent of from 0 to 75 mol % of an aluminum compound which is soluble in the inert hydrocarbon and has the formula

$$R^4\text{-}\underset{\substack{| \\ R^6}}{Al}\text{-}R^5$$

where

$R^4$ and $R^5$ are each $C_1$–$C_{12}$-hydrocarbyl and

$R^6$ is $C_1$–$C_{12}$-hydrocarbyl or chlorine,

with the proviso that (i) the mol % under (1.2.2.1) and (1.2.2.2) add up to 100 and (ii) the atomic ratio of titanium in the solid-phase intermediate (IV): aluminum in aluminum component (V) is within the range from 1:1 to 1:30.

## Revendications

1. Procédé de préparation de copolymères de l'éthylène et de proportions mineures de mono-oléfines en $C_3$ à $C_8$ par polymérisation du ou des monomères à des températures de 30 à 200°C et des pressions de 1 à 200 bars sur un système catalytique de Ziegler, composé de

(1) un composant catalytique au titane et

(2) un composant catalytique à l'aluminium, de la formule

$AlR_3$,

où $R_3$ représente un groupe hydrocarboné en $C_1$ à $C_{12}$,

avec les mesures que (i) le rapport atomique du titane du composant catalytique (1) à l'aluminium du composant catalytique (2) se situe entre 1:5 et 1:700 et que (ii) le composant catalytique au titane (1) mis en œuvre est un produit à phase solide (VI), obtenu en mettant en contact

(1.1) d'abord

(1.1.1) une matière (I) inorganique poreuse en fines particules de la formule $SiO_2.aAl_2O_3$, où a est un nombre entre 0 et 2, d'une granulométrie de 1 à 1000 µm, d'un volume des pores de 0,3 à 3 $cm^3/g$ et d'une surface de 100 à 1000 $m^2/g$, et

(1.1.2) une solution (II) obtenue par le mélange de

(IIa) 100 parties en poids d'un alcool de la formule $R^1$–OH,

où $R^1$ désigne un groupe hydrocarboné saturé en $C_1$ à $C_8$,

(IIb) 0,01 à 6 parties en poids, calculées comme titane, d'un trichlorure de titane de la formule $TiCl_3.nAlCl_3$, où n est un nombre compris entre 0 et 0,5, ainsi que

(IIc) 0,01 à 4 parties en poids, calculées comme magnésium, de chlorure de magnésium $MgCl_2$,

pour former une dispersion (III), dans laquelle le rapport pondéral entre la matière inorganique-oxydée (I) et le titane, du trichlorure de titane (IIb) est compris entre 1:0,01 et 1:0,2 et le rapport pondéral entre la matière inorganique-oxydée (I) et le magnésium du chlorure de magnésium (IIc) est compris entre 1:0,01 et 1:0,25, dispersion (III) qui est concentrée à une température inférieure à 200°C et supérieure au point de fusion de l'alcool (IIa) utilisé jusqu'à une consistance sèche et la formation d'un produit à phase solide intermédiaire (IV), (1.2) et ensuite

(1.2.1) le produit à phase solide (IV) obtenu sub (1.1) et

(1.2.2) un composant aluminique (V), qui contient, à côté de l'aluminium un groupe hydrocarboné en $C_1$ à $C_{12}$ et qui est dissous dans un hydrocarbure inerte, pour former une dispersion, dans laquelle le produit à phase solide (VI), qui y est dispersé, constitue le composant catalytique au titane (1),

caractérisé en ce que le composant catalytique au titane (1) est le produit à phase solide (VI), obtenu dans le stade (1.2) avec un composant aluminique(V), constitué

(1.2.2.1) de 25 à 100% molaires d'un composé complexe, soluble dans l'hydrocarbure inerte, répondant à l'une des formules brutes

$$(R^2_3Si)_mOR^3_{2-m} \cdot R^4-\underset{\displaystyle R^6}{\underset{|}{Al}}-R^5$$

ou

$$(R^2_3Si)_nNR^3_{3-n} \cdot R^4-\underset{\displaystyle R^6}{\underset{|}{Al}}-R^5$$

ou

dans lesquelles

m = 1 ou 2

n = 1, 2 ou 3

$R^2$, $R^3$, $R^4$ et $R^5$ désignent un groupe hydrocarboné en $C_1$ à $C_{12}$ et

$R^6$ représente un groupe hydrocarboné en $C_1$ à $C_{12}$ ou un atome de chlore, et

(1.2.2.2) de 0 à 75% molaires d'un composé aluminique, soluble dans l'hydrocarbure inerte, de la formule

$$R^4-\underset{\displaystyle R^6}{\underset{|}{Al}}-R^5$$

dans laquelle $R^4$ et $R^5$ désignent un groupe hydrocarboné en $C_1$ à $C_{12}$ et

$R^6$ représente un groupe hydrocarboné en $C_1$ à $C_{12}$ ou un atome de chlore,

avec les mesures que (i) la somme des % molaires de (1.2.2.1) et de (1.2.2.2) est égale à 100 et que (ii) le rapport atomique entre le titane du produit à phase solide intermédiaire (IV) et l'aluminium du composant aluminique (V) est compris entre 1:1 et 1:30.